# EUROPEAN PATENT SPECIFICATION

(11) **EP 1 625 653 B1**
(45) Date of publication and mention of the grant of the patent: **12.12.2012**
(21) Application number: 04729118.2
(22) Date of filing: 23.04.2004
(51) Int. Cl.: H02M 7/5387

(54) **HIGHLY FAIL-SAFE POWER GENERATOR, PARTICULARLY FOR RAIL SYSTEMS, OR THE LIKE**
HOCHPANNENSICHERER STROMGENERATOR, INSBESONDERE FÜR SCHIENENSYSTEME UND DERGLEICHE
GENERATEUR D'ELECTRICITE A SECURITE ABSOLUE DESTINE, NOTAMMENT, A DES SYSTEMES FERROVIAIRES OU SIMILAIRES

(30) Priority: 22.05.2003 IT SV20030022
(43) Date of publication of application: 15.02.2006
(73) Proprietor: ALSTOM FERROVIARIA S.P.A., 12038 Savigliano (Cuneo) (IT)
(72) Inventor: CARPANELLI, Maurizio, I-40128 Bologna (IT); GIOVANNUCCI, Andrea, I-40128 Bologna (IT); MARZOLA, Roberto, I-44100 Ferrara (IT)
(74) Representative: Karaghiosoff, Giorgio Alessandro
(86) International application number: PCT/EP2004/050594
(87) International publication number: WO 2004/105227

(56) References cited:
- EP-A- 0 588 199
- DE-A- 10 051 156
- US-A- 4 636 933
- US-B1- 6 307 763

## Description

The invention relates to a highly fail-safe power generator, particularly for rail systems, comprising a bridge inverter, which has two pairs of controllable switching elements arranged on two superimposed rows, a voltage supply connected to the input terminals of the inverter and a power consuming unit connected to the output terminals of the inverter, controller means which generate sinusoidal PWM modulated signals for controlling the switching elements, a protection fuse on the input terminals for interrupting power when the switching elements are short-circuited.

Such generators are known, for instance from US patent 4,636,933. In the generator according to this document, the switching elements are controlled in pairs by control signals from two controllers. The controllers control, by two anti-phase signals, one of the two diagonally opposite pairs of switching elements respectively.

The controllers generate the PWM modulated control signals from FSK modulated excitation signals, which are supplied to them by a common FSK generator. A current sensor within the inverter provides a signal to a surge protector unit, which in turn provides a feedback and enabling signal to the two controllers. The generator of US 4, 636, 933 is a circuit with fail-safe characteristics having a feedback operation to maintain a power output at a constant level independently of supply voltage variations. The generator provides a simply PWM modulated square wave signal. The architecture of the generator of US 4,636,933 does not have a fail-safe operation in the modulation of the controller exciting FSK signal, whose frequency corresponds to the switching frequency, hence to the frequency of the generator output signal. Any modulation frequency variation of the controller exciting signal causes no generator response, unless a current variation is detected by the current sensor and by its respective feedback circuit. The switching process is also not controlled in a fail-safe manner, as each pair of switching elements is controlled by the same signal of the corresponding controller and also the two controllers are not independent of each other. Here again, any switching element control signal deviation may not affect the operation of the generator to a sufficient extent to generate a definite and unique detectable malfunctioning condition.

In railway applications, such generators are used to serve a number of power consuming units, such as yard elements, track circuits, etc.. With the introduction of electronic signaling and railway traffic management devices, a proper power supply for these devices has become of the utmost importance. Any variation of signal voltage, frequency and modulation as compared with predetermined values may cause state signaling errors, for instance in signaling devices or track circuits, or train detection errors in railway blocks, thereby generating danger conditions. In case of malfunctioning, railway safety rules generally require the malfunctioning condition to be somehow detected and the device to be forced to an operating condition that corresponds to a signaling or restrictive control condition, for instance red light signaling or an "occupied" status for a railway block. Typically, the train detection signals on the blocks of railway tracks are FSK modulated signals of sinusoidal signals having a predetermined frequency, and proper detection thereof is dependent on the accuracy of the signal provided by the generator to the modulation circuit.

In railway or other similar applications, there is the need of generators having high fail-safe characteristics, such that the generators can only assume a stable and unique state, which is preferably restrictive or generates a signaling condition or a traffic restrictive action, when their operation cannot assure output signals with parameters that do not exceed predetermined tolerances with respect to ratings.

The object of the present invention is to provide a generator like the one described above, which provides an output signal having a sinusoidal waveform and predetermined amplitude, frequency and modulation characteristics, and ensuring a fail-safe operation with respect to the above amplitude, frequency and modulation characteristics. The invention is set forth in claim 1.

The invention achieves the above purposes by providing a generator like the one described hereinbefore, wherein one of the two controllers controls the two switching elements arranged in one of the two rows, and the other of the two controllers controls the two switching elements of the other row, the two controllers being controlled by separately generated exciting signals, and the two controllers being wholly electrically independent of each other, whereas an optoelectronic synchronizing connection is provided between the two controllers.

Particularly, each controller consists of a programmable device and has its own software, its own control data area, its own clock and its own power supply.

According to another improvement characteristic, the two controllers have different software and control data areas, according to diversity-based fail-safety rules.

Thanks to these characteristics, the modulated control signal of the two controllers is generated separately and independently for each controller. Therefore, this redundancy, in addition to the independency of the two channels and to the voter function of the power stage provide a fail-safe generation of the selected modulation of the generator output signal, of the frequency of the output signal and of the amplitude of the output voltage, which can never exceed its rating to a greater extent than the variation of the generator input voltage.

In accordance with yet another advantageous characteristic, each controller controls each of the two switching elements of the associated pair of switching elements by a signal that is generated independently of the control signal for the other switching element. Thus, there are four independently generated signals.

In order that the generator may be used for a wide range of purposes, i.e. for a number of different railway elements, the switching element controlling signal is a unipolar, Sinusoidal Pulse Width Modulation (SPWM) signal.

The switching frequency is advantageously selected two orders of magnitude higher than the generator output frequency, and anyway higher than the audible range of frequencies.

The switching frequency is selected according to inverter efficiency considerations and is anyway higher than the output frequency to be generated. The limits for the switching frequency and the frequency to be generated depend on technological problems, rather than on the architecture of the system. Particularly, in railway applications, common switching frequencies generate a sinusoidal output signal having a frequency of 30 Hz to 1 kHz, especially of 50 to 83 Hz.

Thanks to the inventive architecture, the generator of this invention provides a high failure response, particularly for failures that affect the safety of railway systems and provides a sinusoidal supply output signal, having a predetermined amplitude, a predetermined frequency and a predetermined phase modulation rule, all these output signal waveform properties being generated with fail-safe characteristics.

The independence between controllers and between switching element controlling signals, i.e. both between the two controllers and between the two different control signals for the two switching elements controlled by the same controller, the diversity between the programs and modulated control signal generating data of the two controllers have the immediate effect of causing an at least partial short-circuit condition within the inverter, which short-circuit condition is not compensated for by any feedback acting on the controller.

Therefore, when the modulated signals for controlling the switching elements, controlled in pairs by the two controllers and individually within each pair, are out of phase, the current in the inverter increases immediately and causes the protection fuse to break. Further, during the transient failure condition, the power (or voltage) being transferred to the user is considerably decreased or nullified. Such failure results in an immediate lack of the output signal, therefore the immediate assumption of a unique and well-defined operating condition of the generator. This state is immediately and uniquely detectable by the equipment being powered by the generator, hence it may cause such equipment to assume a unique restrictive state or read such state as a control for the transmission of a restrictive state signal to a control unit such as a station-based Vital Computer apparatus or a diagnostic unit. Such surge condition in the inverter and such fuse failure occurs either when the frequency of the output signal and the switching frequencies are not correct or when the modulation rule of the switching element controlling signals is not correct. Note that, since the signals for controlling the individual switching elements are generated independently, though to a different extent for the two pairs controlled by the two totally independent controllers and the two switching elements of each pair that is controlled by each controller, variations in the modulation frequency or modulation rule of the control signal for one switching element occur independently of the control signals for the other switching elements. In practice, the other switching elements are still controlled properly, without being affected by the deviated behavior of the remaining switching element. This means that the wrong control of one switching element does not affect the control of the other switching elements, whereby no mutual compensation mechanisms may occur, but the inverter is necessarily forced into a current increase condition therein, i.e. into a fuse breaking condition, resulting in the output signal being nullified.

Further improvements of the invention will form the subject of the dependent claims.

The characteristics of the invention and the advantages deriving therefrom will appear more clearly from the following description of a few non-limiting embodiments which are illustrated in the accompanying drawings, in which:
Figure 1 is a general flowchart of a generator according to the present invention.
Fig. 2 shows an enlarged detail of the bridge inverter and the controllers which control the switching elements.
Fig. 3 shows a detail of the AC/DC converter situated at the input of the inverter.
Fig. 4 is a flowchart of a railway system that uses the generator of the previous figures for train detection signals in station track circuits and in country track circuits.
Fig. 5 is a more detailed flowchart of the generator, as compared with Fig. 4.
   Fig. 6 is a flowchart of a train detection system on a track circuit that uses the generator of the previous figures.
Figure 7 is a flowchart of a station-based track sequencing system, having a generator as shown in one or more of the preceding figures.

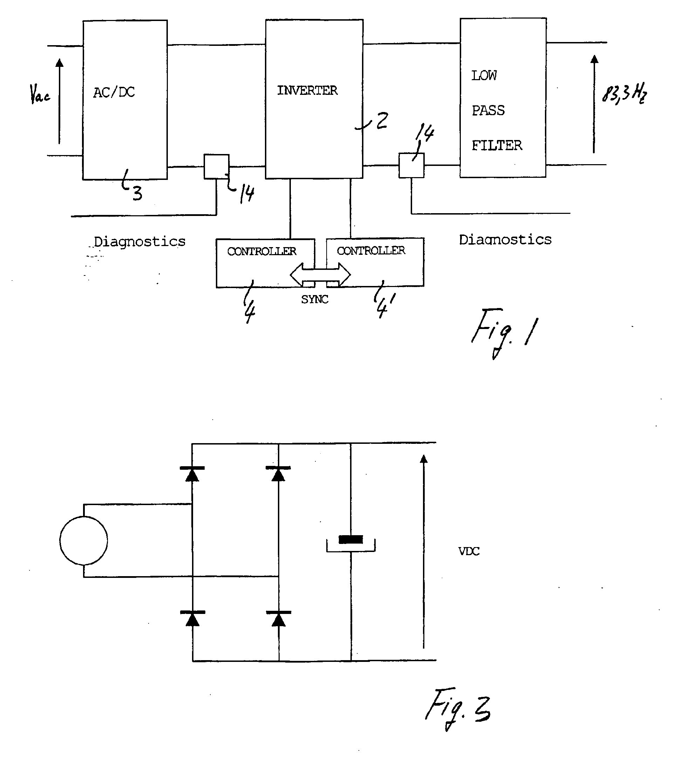

Referring to Figures 1 to 3, a generator for a supply signal having a predetermined amplitude, frequency and SPWM modulation and fail-safe characteristics comprises a bridge inverter 2, with four switching elements 102, 202, 302, 402. The input terminals of the inverter are connected to an alternating current supply through an AC/DC converter 3. The voltage output of the AC/DC converter 3 is monitored by a sensor 14 of a diagnostic unit, which is by no means a feedback element of the inverter control loop. At the output of the inverter 2, the signal generated thereby is provided to a power consuming unit through a low-pass filter, which removes the high frequency harmonics from the SPWM modulated output signal.

As is apparent from Figure 3, in the present generator embodiment, the AC/DC converter consists of an uncontrolled rectifier.

In the embodiment as shown in the Figure, the output signal is a low frequency sinusoidal signal and particularly has a frequency of 83.3 Hz. Such frequency is not randomly selected and, as shown in the following embodiments, is an optimized frequency for railway applications for which the generator is especially designed. For railway applications, the optimal frequency range is of about 30 Hz to 1 kHz, preferably of 50 to 83 Hz, although the circuit as shown and described herein shall not be intended to be limited to such frequency range.

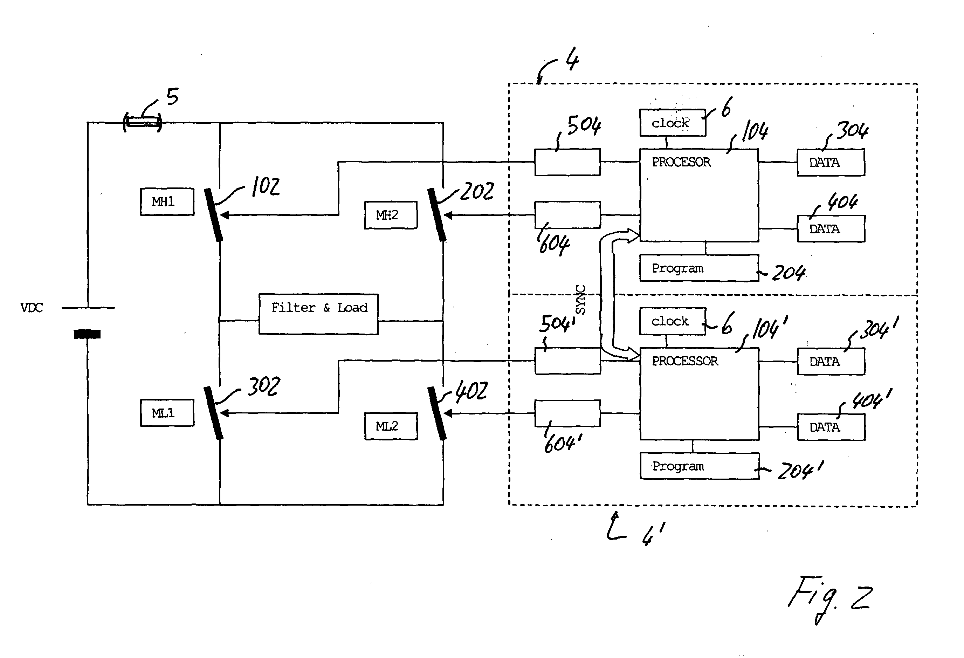

Referring to Figure 2, the inverter includes four switching elements 102, 202, 302, 402, arranged in pairs in two rows, which are controlled by two controllers 4, 4' that are programmable with a control signal modulated according to the Phase Shift Keying, PSK, protocol.

As a rule, each controller 4, 4' controls a pair of switching elements 102, 202 and 302, 402 on one of the two superimposed rows. At the input terminal of the power supply for the switching elements, a fuse 5 is provided, which is set to a predetermined maximum admissible power value within the inverter.

The two controllers 4, 4' are wholly independent of each other and are each equipped with a processor unit 104, 104', which is connected to a dedicated clock generator 6, a dedicated program storage 204, 204' and a dedicated storage, preferably two separate data storages 304, 404 and 204', 404', which store the data required for executing the program contained in the storage 204, 204'. The two data sets relate to data or parameters for generating a separate PSK modulated control signal for each of the two switching elements 102, 202 and 302, 402 respectively of the two pairs that are independently controlled by a corresponding controller 4, 4'. The independent generation of the two control signals is shown by the black boxes 504, 604 and 504', 604' at the outputs of the two controllers 4, 4'.

Obviously, the separate controller principle as disclosed above with reference to Figure 2 may be also practically implemented in another manner. In a mode that is more suitable to railway applications, which is stricter in terms of the implementation of the switching process and of the data required therefor, instead of using a programmable microprocessor unit including program storages and data storages, each controller consists of an electronic unit for generating control signals according to a predetermined algorithm, which is implemented in the hardware in a strict, unchangeable manner. This prevents any malfunctioning arising from reading errors by the control program in the program storages 204, 204'.

The data required for executing the control algorithms is itself strictly implemented in the hardware and specifically by storage in so-called EPROMs, which prevent such data from being changed after being stored therein.

Note that even the above stricter embodiment provides a safety that is based on the diversity of hardware construction, of the control algorithm and of the data area.

In Figure 2, the four switching elements 102, 202, 302, 402 are also designated by letters MH1, MH2 and ML1, ML2, which identify their sinusoidal output signal generating function.

Preferably and advantageously, the programs and parametric data that are used for generating the modulated switching element control signal, as well as certain hardware components, are duplicated in the two controllers, while accounting for diversity rules. This method is known and widely used in redundant systems.

Moreover, the two controllers 4, 4', that must be synchronized, are connected by an optoisolated synchronizing line 7, which allows the two controllers to be wholly electrically independent of each other.

Thanks to the above redundancy characteristics and to the independency of the process wherewith the signals for controlling the individual switching elements 102, 202, 302, 402 are generated, each switching element performs its functions in a wholly independent and blind manner, relative to the other switching elements, whereby no compensation may occur in the switching process of the switching elements.

From a logical point of view, the structure of the inverter for the generator of this invention is similar to a redundant structure having the function of a final voter, wherein, when no correct functional coincidence of all switching elements is achieved, the voter causes the inverter to switch to a stable, generally restrictive, functional state.

Particularly, in the present inverter architecture, since the individual switching elements 102, 202, 302, 402 are switched in a wholly independent manner, any variation in the switching frequency, in the switching signal modulation and in the switching phase between elements immediately causes a functional failure, resulting in a short-circuit condition within the inverter, with the fuse being broken thereby. Then, the inverter is separated from the power supply at the input and the generator provides no output signal, thereby entering a stable and uniquely defined functional state. This kind of response of the inverter to switching element controlling conditions that do not exactly correspond to correct conditions, prevents the generation of an output signal whose frequency, modulation, or amplitude are different from predetermined ones. In fact, in these conditions, an output signal whose parameters are different from their respective ratings, obviously considering the admitted tolerances, may cause, especially in rail system devices, false signals or functional or state conditions of such devices which are not stable or not uniquely defined or recognizable by the control logics of the railway system, thereby causing a potentially hazardous situation for the railway traffic.

By being switched to a condition of total lack of the output signal, the generator of the invention assumes a well defined and stable operating condition, and such operating condition is uniquely detectable and interpretable by the devices whereto the generator output signal is provided, and may be used to implement safety procedures for controlling the railway system into a safety condition. Therefore, for instance, when the generator of the present invention is used to supply power to the generator of the coded track circuit blocking signal, the lack of the generator output signal causes the coded blocking signal to be absent, whereby the track circuit automatically assumes the occupied track condition.

Track 4 shows a first embodiment of the generator of this invention for a railway station system and particularly for the so-called station track circuits.

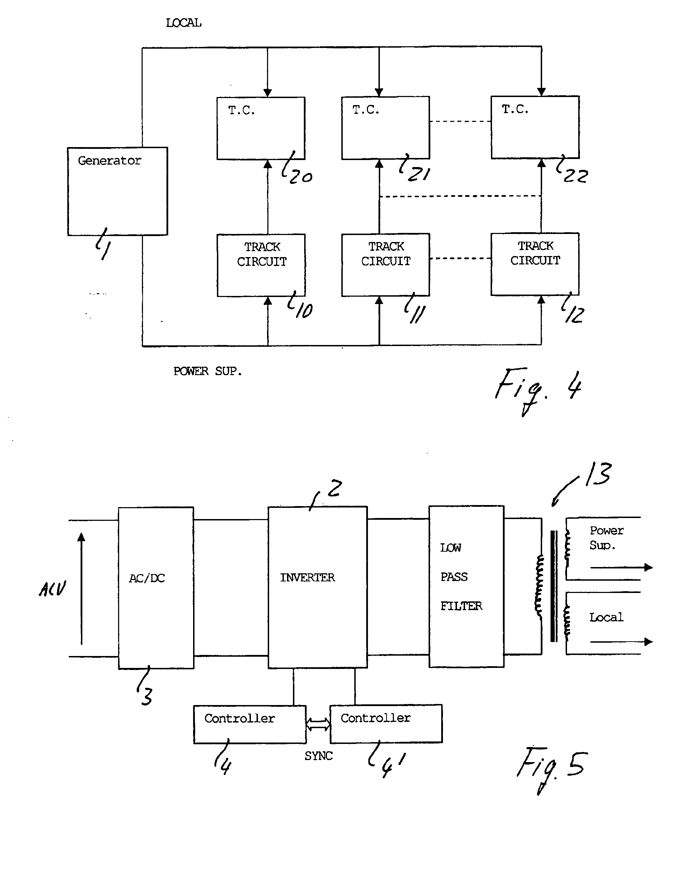

In this case, the generator of this invention, generally designated by numeral 1 supplies power to the track circuits for generating the coded blocking signal and to the disk relays 20, 21, 22, corresponding to said track circuits 10, 11, 12. The signal being used has a power rating of 1 kVA and the generator has two sinusoidal low frequency outputs, particularly at a frequency of 83.3 kHz. The two output signals (power supply) and (local) are obtained thanks to an output transformer 13, as shown in the flowchart of Fig. 5 which shows, like Fig. 1, the generator 1 in greater detail.

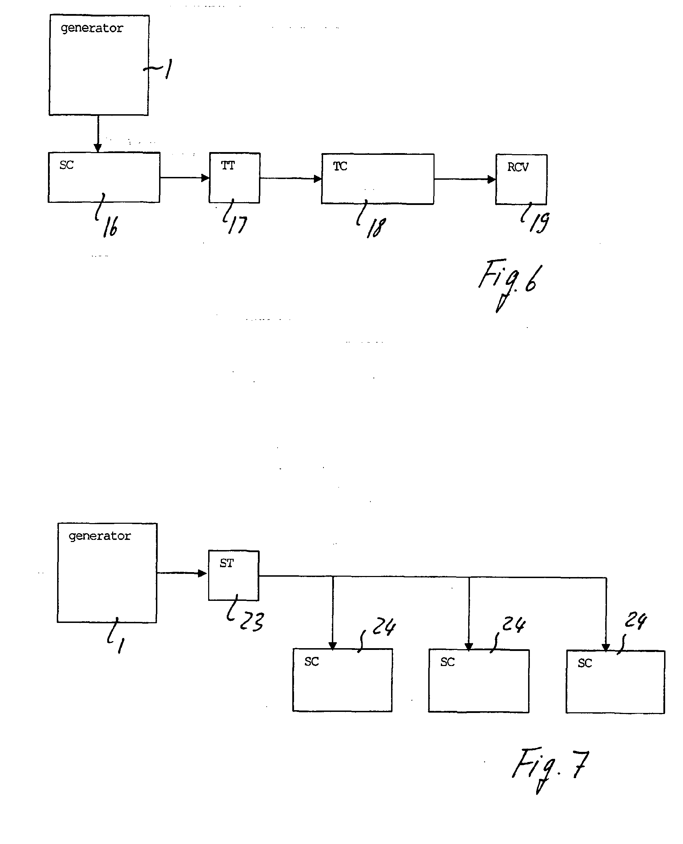

Fig. 6 shows the use of an inventive generator as a line generator, i.e. as a generator of the coded blocking signal associated to the various track circuits of the railway segment.

The generator 1 supplies the sinusoidal output signal at 83.3 kHz to a static coder circuit 16 which modulates the above signal by the superposition of a square wave. The coded signal is routed to the transmitter of the track circuit 18 through the track transformer 17. The signal runs along the track section and is later intercepted by the receiver 19 which decodes the blocking signal, and extracts and checks its modulation code.

Finally, Fig. 7 shows the use of an inventive generator in a track sequencing system. Here, thanks to a station-based transformer 23, the generator supplies power to a number of static coders 24, each coding the power supply signal in a different manner.

In the examples of Figure 6 and 7, the generator is as shown in Figure 1.

The wide use of the generator of this invention is several types of rail systems is explained by the particular generator output signal modulation, i.e. SPWM.

Also, the above description clearly shows the advantages of the fail-safe generation of the output signal, with respect to signal amplitude, frequency and modulation, the latter not necessarily being a PSK modulation. Fail-safe characteristics are provided by the particular architecture of the inverter, which was specially selected as an open loop inverter, and with no mutual influence being admitted among the switching processes of the individual switching elements, to ensure that any variation in the frequency or modulation of the switching element controlling signals cannot be compensated for in any manner, and failsafely cause the inverter to be switched off. This forces the generator into a stable null output condition, and allows the devices being supplied with power by the generator to uniquely detect the no generator output signal condition and to implement emergency procedures, such as the transmission of controls for setting the power consuming units into a more restrictive railway traffic condition.

## Claims

1. A highly fail-safe power generator, particularly for rail systems, comprising a bridge inverter, which has two pairs of controllable switching elements (102, 202, 302, 402) arranged on two superimposed rows and forming two switching legs of series connected switching elements, a voltage supply connected to the input terminals (3) of the inverter (2) and a power consuming unit connected to the output terminals of the inverter, controller means comprising two controllers (4, 4') which generate sinusoidal PWM modulated signals for controlling the switching elements (102, 202, 302, 402), so that the control signals (504, 504') for the switching elements of the first switching leg, as well as the control signals (604, 604') for the switching elements of the second switching leg, are in anti-phase respectively, a protection fuse (7) on the input terminals for interrupting power when the switching elements are short-circuited,
**characterized in that**
one of the two controllers (4) controls the two switching elements (102, 202) arranged in one of the two rows, and the other (4') of the two controllers controls the two switching elements (302, 402) of the other row, the two controllers (4, 4') being wholly functionally and electrically independent of each other, whereas an optoelectronic synchronizing connection (7) is provided between the two controllers (4, 4').

2. A generator as claimed in claim 1, **characterized in that** each controller (4, 4') consists of a programmable microprocessor unit (104, 104'), has its own software (204, 204'), its own control data area (504, 604, 504', 604'), its own clock (6) and its own power supply, and generates the modulated signal for controlling the individual switching elements by executing the dedicated program (204, 204') stored in a memory area.

3. A generator as claimed in claim 1 or 2, **characterized in that** the program (204, 204') for generating the modulated signal to control the switching elements (102, 202, 302, 402) and the control data areas (304, 404, 304', 404') of the two controllers (4, 4') are different from each other, in accordance with diversity-based fail-safety rules, i.e. in terms of type and code of the program and/or type and code of the control data /504, 604, 504', 604'), and wherein the two controllers (4, 4') independently generate the modulated control signals.

4. A generator as claimed in one or more of the preceding claims, **characterized in that** each controller is formed by an electronic unit wherein the switching process or control algorithm is strictly implemented by hardware construction, which unit communicates with an EPROM data storage, that is burnt to prevent the data required for controller functions from being changed and/or replaced.

5. A generator as claimed in claim 4, **characterized in that** the process or algorithm for generating the modulated signal to control the switching elements (102, 202, 302, 402) for the two controllers (4, 4') is implemented in the hardware logics, in accordance with diversity rules, and that the control data areas (304, 404, 304', 402') are also different from each other, in accordance with diversity-based fail-safety rules, i.e. in terms of type and code of the process and/or type and coding of the control data (504, 604, 504', 604'), and of generation thereof, the two controllers (4, 4') independently generating the modulated switch controlling signals.

6. A generator as claimed in one or more of the preceding claims, **characterized in that** each controller (4, 4') controls each of the two switching elements (102, 202; 302, 403) of the associated pair of switching elements by a signal (304) that is generated independently of the control signal (404) for the other switching element.

7. A generator as claimed in one or more of the preceding claims, **characterized in that** the signals for controlling the switching elements (102, 202, 302, 402) are unipolar, Sinusoidal Pulse Width Modulation (SPWM) signals.

8. A generator as claimed in one or more of the preceding claims, **characterized in that** the switching frequency is suitably selected to be higher than the output frequency.

9. A generator as claimed in claim 8, **characterized in that** the selected switching frequency is such as to generate a sinusoidal output signal having a frequency of 30 Hz to 1 kHz, particularly of 50 to 83 Hz.

10. A generator as claimed in one or more of the preceding claims, **characterized in that** the fuse has a predetermined breaking threshold in the inverter bridge circuit.

11. A generator as claimed in one or more of the preceding claims, **characterized in that** it is used to generate the signal to supply power to rail system units particularly signaling units.

12. A generator as claimed in claim 1, **characterized in that** it is used in combination with a static coder for generating a coded blocking signal in station track circuits or railway track sections.

13. A generator as claimed in claim 11, **characterized in that** it is used in combination with disk relay track circuits.

## Patentansprüche

1. Hoch ausfallsicherer Energiegenerator, insbesondere für Eisenbahnsysteme, umfassend einen Brückenwechselrichter, der zwei Paare von steuerbaren Schaltelementen (102, 202, 302, 402) aufweist, welche in zwei übereinander liegenden Reihen angeordnet sind und zwei Schaltzweige aus in Reihe geschalteten Schaltelementen bilden, eine Spannungsversorgung, die an die Eingangsklemmen (3) des Wechselrichters (2) angeschlossen ist, und ein energieverbrauchendes Aggregat, das an die Ausgangsklemmen des Wechselrichters angeschlossen ist, Steuerungsmittel, welche zwei Steuerungen (4, 4') umfassen, die sinusförmige pulsweitenmodulierte Signale zum Steuern der Schaltelemente (102, 202, 302, 402) erzeugen, derart, dass die Steuersignale (504, 504') für die Schaltelemente des ersten Schaltzweigs sowie die Schaltsignale (604, 604') für die Schaltelemente des zweiten Schaltzweigs jeweils gegenphasig sind, eine Schutzsicherung (7) an den Eingangsklemmen zum Unterbrechen der Energie, wenn die Schaltelemente kurzgeschlossen sind,
**dadurch gekennzeichnet, dass**
eine der beiden Steuerungen (4) die beiden Schaltelemente (102, 202) steuert, die in einer der beiden Reihen angeordnet sind, und die andere (4') der beiden Steuerungen die beiden Schaltelemente (302, 402) der anderen Reihe steuert, wobei die beiden Steuerungen (4, 4') funktional und elektrisch völlig voneinander unabhängig sind, während zwischen den beiden Steuerungen (4, 4') eine optoelektronische Synchronisierungsverbindung (7) vorgesehen ist.

2. Generator nach Anspruch 1, **dadurch gekennzeichnet, dass** jede Steuerung (4, 4') aus einer programmierbaren Mikroprozessoreinheit (104, 104') besteht, ihre eigene Software (204, 204'), ihren eigenen Steuerdatenbereich (504, 604, 504', 604'), ihren eigenen Taktgeber (6) und ihre eigene Energieversorgung aufweist und das modulierte Signal zum Steuern der einzelnen Schaltelemente durch Ausführen des dafür vorgesehenen Programms (204, 204'), das in einem Speicherbereich gespeichert ist, erzeugt.

3. Generator nach Anspruch 1 oder 2, **dadurch gekennzeichnet, dass** das Programm (204, 204') zum Erzeugen des modulierten Signals, um die Schaltelemente (102, 202, 302, 402) zu steuern, und die Steuerdatenbereiche (304, 404, 304', 404') der beiden Steuerungen (4, 4') voneinander verschieden sind, gemäß diversitätsbasierten Ausfallsicherheitsregeln, d.h. im Sinne des Typs und Codes des Programms und/oder des Typs und Codes der Steuerdaten (504, 604, 504', 604'), und wobei die beiden Steuerungen (4, 4') die modulierten Steuersignale unabhängig voneinander erzeugen.

4. Generator nach einem oder mehreren der vorhergehenden Ansprüche, **dadurch gekennzeichnet, dass** jede Steuerung durch eine elektronische Einheit gebildet ist, wobei der Schaltprozess oder Steueralgorithmus streng als Hardwarekonstruktion realisiert ist, wobei die Einheit mit einem EPROM-Datenspeicher kommuniziert, der gebrannt ist, um zu verhindern, dass die für Steuerungsfunktionen erforderlichen Daten geändert und/oder getauscht werden können.

5. Generator nach Anspruch 4, **dadurch gekennzeichnet, dass** der Prozess oder Algorithmus zum Erzeugen des modulierten Signals, um die Schaltelemente (102, 202, 302, 402) für die beiden Steuerungen (4, 4') zu steuern, in der Hardwarelogik gemäß Diversitätsregeln realisiert ist, und dass die Steuerdatenbereiche (304, 404, 304', 404') ebenfalls voneinander verschieden sind, gemäß diversitätsbasierten Ausfallsicherheitsregeln, d.h. im Sinne des Typs und Codes des Programms und/oder des Typs und Codes des Prozesses und/oder des Typs und der Codierung der Steuerdaten (504, 604, 504', 604') und der Erzeugung davon, wobei die beiden Steuerungen (4, 4') die modulierten Schaltsteuersignale unabhängig voneinander erzeugen.

6. Generator nach einem oder mehreren der vorhergehenden Ansprüche, **dadurch gekennzeichnet, dass** jede Steuerung (4, 4') jedes der beiden Schaltelemente (102, 202; 302, 402) des zugeordneten Paares von Schaltelementen durch ein Signal (304) steuert, welches unabhängig von dem Steuersignal (404) für das andere Schaltelement erzeugt wird.

7. Generator nach einem oder mehreren der vorhergehenden Ansprüche, **dadurch gekennzeichnet, dass** die Signale zum Steuern der Schaltelemente (102, 202, 302, 402) unipolare Signale mit sinusförmiger Pulsweitenmodulation (SPWM) sind.

8. Generator nach einem oder mehreren der vorhergehenden Ansprüche, **dadurch gekennzeichnet,**
**dass** die Schaltfrequenz geeignet ausgewählt wird, um höher als die Ausgangsfrequenz zu sein.

9. Generator nach Anspruch 8, **dadurch gekennzeichnet, dass** die ausgewählte Schaltfrequenz derart ist, dass sie ein sinusförmiges Ausgangssignal mit einer Frequenz von 30 Hz bis 1 kHz, insbesondere von 50 bis 83 Hz, erzeugt.

10. Generator nach einem oder mehreren der vorhergehenden Ansprüche, **dadurch gekennzeichnet, dass** die Sicherung eine vorgegebene Unterbrechungsschwelle in der Wechselrichterbrückenschaltung aufweist.

11. Generator nach einem oder mehreren der vorhergehenden Ansprüche, **dadurch gekennzeichnet,**
**dass** er verwendet wird, um das Signal zu erzeugen, um Energie zu Eisenbahnsystemeinheiten, insbesondere zu Signalisierungseinheiten, zuzuführen.

12. Generator nach Anspruch 1, **dadurch gekennzeichnet, dass** er in Kombination mit einem statischen Codierer zum Erzeugen eines codierten Blocksignals in Bahnhofsgleiskreisen oder Bahnstreckenabschnitten verwendet wird.

13. Generator nach Anspruch 11, **dadurch gekennzeichnet, dass** er in Kombination mit Scheibenrelaisgleiskreisen verwendet wird.

## Revendications

1. Générateur de puissance à sécurité hautement intégrée, particulièrement destiné aux systèmes ferroviaires, comprenant un onduleur en pont, lequel présente deux paires d'éléments de commutation contrôlables (102, 202, 302, 402) agencés sur deux rangées superposées et formant deux tronçons de commutation d'éléments de commutation connectés en série, une source de tension connectée aux bornes d'entrée (3) de l'onduleur (2) et une unité de consommation d'énergie connectée aux bornes de sortie de l'onduleur, un moyen de commande comprenant deux contrôleurs (4, 4') qui génèrent des signaux modulés PWM sinusoïdaux destinés à commander les éléments de commutation (102, 202, 302, 402), de sorte que les signaux de commande (504, 504') pour les éléments de commutation du premier tronçon de commutation, ainsi que les signaux de commande (604, 604') pour les éléments de commutation du second tronçon de commutation, sont en opposition de phase respectivement, un fusible de protection (7) sur les bornes d'entrée pour interrompre l'alimentation lorsque les éléments de commutation sont court-circuités,
**caractérisé en ce que**
l'un des deux contrôleurs (4) commande les deux éléments de commutation (102, 202) agencés dans l'une des deux rangées,
et l'autre (4') des deux contrôleurs commande les deux éléments de commutation (302, 402) de l'autre rangée, les deux contrôleurs (4, 4') étant fonctionnellement et électriquement entièrement indépendants l'un de l'autre, alors qu'une connexion de synchronisation optoélectronique (7) est délivrée entre les deux contrôleurs (4, 4').

2. Générateur selon la revendication 1, **caractérisé en ce que** chaque contrôleur (4, 4 ') est constitué d'une unité à microprocesseur programmable (104, 104'), possède son propre logiciel (204, 204'), sa propre zone de données de commande (504, 604, 504', 604'), sa propre horloge (6) et sa propre source d'alimentation, et génère le signal modulé en vue de commander les éléments de commutation individuels en exécutant le programme dédié (204, 204') stocké dans une zone de mémoire.

3. Générateur selon la revendication 1 ou 2, **caractérisé en ce que** les programmes (204, 204') destinés à générer le signal modulé en vue de commander les éléments de commutation (102, 202, 302, 402) et les zones de données de commande (304, 404, 304', 404') des deux contrôleurs (4, 4') sont mutuellement distincts, conformément aux règles de sécurité intégrée basées sur la diversité, c'est-à-dire en termes de type et de code du programme et/ou de type et de code des données de commande (504, 604, 504', 604'), et dans lequel les deux contrôleurs (4, 4') génèrent les signaux de commande modulés indépendamment.

4. Générateur selon l'une quelconque ou plusieurs des revendications précédentes, **caractérisé en ce que** chaque contrôleur est formé par une unité électronique dans laquelle le processus de commutation ou l'algorithme de commande est strictement mis en oeuvre par une construction matérielle, laquelle unité communique avec un module de stockage de données EPROM lequel est saturé en vue d'empêcher que les données requises pour les fonctions de contrôleur soient modifiées et/ou remplacées.

5. Générateur selon la revendication 4, **caractérisé en ce que** le processus ou l'algorithme destiné à générer le signal modulé en vue de commander les éléments de commutation (102, 202, 302, 402) pour les deux contrôleurs (4, 4') est mis en oeuvre dans les logiques matérielles, conformément aux règles de diversité, et **en ce que** les zones de données de commande (304, 404, 304', 402') sont également différentes les unes des autres, conformément aux règles de sécurité intégrée basées sur la diversité, c'est-à-dire en termes de type et de code du processus et/ou de type et de codage des données de commande (504, 604, 504', 604'), et de génération de celles-ci, les deux contrôleurs (4, 4') générant indépendamment les signaux de commande de commutateur modulés.

6. Générateur selon l'une quelconque ou plusieurs des revendications précédentes, **caractérisé en ce que** chaque contrôleur (4, 4') commande chacun des deux éléments de commutation (102, 202 ; 302, 403) de la paire associée d'éléments de commutation, par le biais d'un signal (304) qui est généré indépendamment du signal de commande (404) pour l'autre élément de commutation.

7. Générateur selon l'une quelconque ou plusieurs des revendications précédentes, **caractérisé en ce que** les signaux destinés à commander les éléments de commutation (102, 202, 302, 402) sont des signaux de modulation d'impulsions en largeur sinusoïdaux (SPWM) unipolaires.

8. Générateur selon l'une quelconque ou plusieurs des revendications précédentes, **caractérisé en ce que** la fréquence de commutation est sélectionnée de manière pertinente afin qu'elle soit supérieure à la fréquence de sortie.

9. Générateur selon la revendication 8, **caractérisé en ce que** la fréquence de commutation sélectionnée est telle qu'elle génère un signal de sortie sinusoïdal ayant une fréquence comprise entre 30 Hz à 1 kHz, précisément comprise entre 50 à 83 Hz.

10. Générateur selon l'une quelconque ou plusieurs des revendications précédentes, **caractérisé en ce que** le fusible présente un seuil de rupture prédéterminé dans le circuit d'onduleur en pont.

11. Générateur selon l'une quelconque ou plusieurs des revendications précédentes, **caractérisé en ce qu'**il est utilisé pour générer le signal permettant d'alimenter en énergie les unités des systèmes ferroviaires, notamment les unités de signalisation.

12. Générateur selon la revendication 1, **caractérisé en ce qu'**il est utilisé conjointement avec un codeur statique en vue de générer un signal de blocage codé dans les circuits de voie des gares ferroviaires ou les tronçons de voie ferrée.

13. Générateur selon la revendication 11, **caractérisé en ce qu'**il est utilisé conjointement avec des circuits de voie de relais de disque.
